Europäisches Patentamt

European Patent Office

Office européen des brevets

(11) Publication number: **0 207 173**

A1

(12)

# EUROPEAN PATENT APPLICATION

published in accordance with Art. 158(3) EPC

(21) Application number: **86900280.8**

(22) Date of filing: **26.12.85**

Data of the international application taken as a basis:

(86) International application number:
**PCT/JP85/00723**

(87) International publication number:
**WO86/04004 (17.07.86 86/17)**

(51) Int. Cl.⁴: **B 23 K 9/12**

(30) Priority: **28.12.84 JP 279717/84**

(43) Date of publication of application:
**07.01.87 Bulletin 87/2**

(84) Designated Contracting States:
**DE FR GB**

(71) Applicant: **FANUC LTD**
**3580, Shibokusa Aza-Komanba Oshino-mura
Minamitsuru-gun Yamanashi 401-05(JP)**

(72) Inventor: **KISHI, Hajimu**
**Hinohirayamadai-Jutaku 1104 7-8, Asahigaoka
6-chome Hino-shi Tokyo 191(JP)**

(72) Inventor: **SAKAKIBARA, Shinsuke**
**Mezon Izumi 101 23-3, Higashiizumi 1-chome
Komae-shi Tokyo 201(JP)**

(72) Inventor: **ISHIKAWA, Haruyuki**
**25, Daikyo-cho
Shinjuku-ku Tokyo 160(JP)**

(74) Representative: **Billington, Lawrence Emlyn et al,
HASELTINE LAKE & CO Hazlitt House 28 Southampton
Buildings Chancery Lane
London WC2A 1AT(GB)**

(54) **SYSTEM FOR CORRECTING WELDING LINE OF AN AUTOMATIC WELDING MACHINE.**

(57) A system for correcting welding lines of an automatic welding machine comprises detecting means (I) for detecting a welding current that flows between the tip of a wire (WR) and a welding member (WK), memory means for storing the welding current detected by the detecting means (I) at either the right end point or the left end point of the welding line during the weaving movement, and operation means for operating the correction amount of the weaving movement based upon the current values at two or more end points stored in said memory means.

Fig. 1

TITLE MODIFIED
see front page

DESCRIPTION

AUTOMATIC WELDING MACHINE WELD LINE CORRECTION SYSTEM

Technical Field

This invention relates to a system for correcting a weld line in an automatic welding machine. More particularly, the invention relates to a system for correcting a weld line in an automatic welding machine in which a voltage is applied across a welding workpiece and a wire projecting from the end of a torch so that an arc is generated from the tip of the wire, and the welding workpiece is welded by weaving the tip of the wire along a welding surface (weaving surface) while the wire is being successively paid out.

Background Art

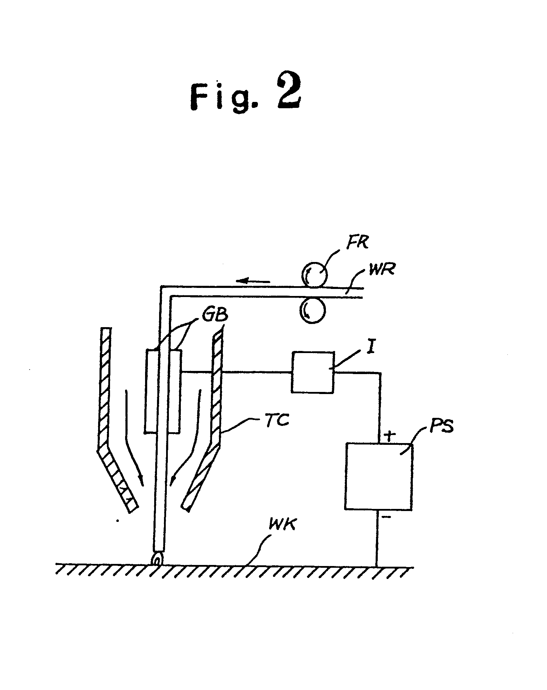

An automatic welding machine performs welding of a welding workpiece by impressing a voltage across a wire and the workpiece to produce an arc at the tip of the wire, and moving the wire tip along a welding path while the wire is successively paid out in small increments. Fig. 2 is a simplified view of such a welding machine. A wire WR is paid out in small increments in the direction of the arrow by feed rollers FR so that its tip protrudes from the end of a torch TC via guide members GB, with the amount by which the wire is fed being controlled in such a manner that the tip comes to occupy a position spaced a predetermined distance from the surface of the workpiece WK. A welding power supply PS generates an

-2-

intermittent high voltage having a predetermined period. The plus side of the high-voltage is applied to the wire WR through the guide members GB, and the minus side is applied to the workpiece WK. Though the arrangement is not shown, the welding machine can be provided with a sensing function by passing a very small short-circuit current into the wire at the end of the torch TC besides the welding current and searching the workpiece at a weaving amplitude stipulated by taught data. The welding current which flows from the welding power supply PS in dependence upon the distance and angle between the wire tip and the welding workpiece WK is sensed by a sensor I so that welding can be performed while the weld line is corrected. In the welding machine, gas from a gas supply unit, which is not shown, is supplied through the interior of the torch TC in the direction of the arrows so as to impinge upon the workpiece and prevent the oxidation of the portion being welded.

When a high voltage is generated intermittently by the welding power supply PS while the gas is being fed from the gas supply unit and the wire is being paid out in small increments, an arc is produced at the tip of the wire and both the wire and the portion being welded are melted to weld the fused portions together. Recently, welding robots in which such a welding operation is performed by a robot have come into use. Specifically, the torch TC of the welding machine is grasped by a robot, which is then made to to move the torch (the tip of the wire) along a weld line to weld the workpiece.

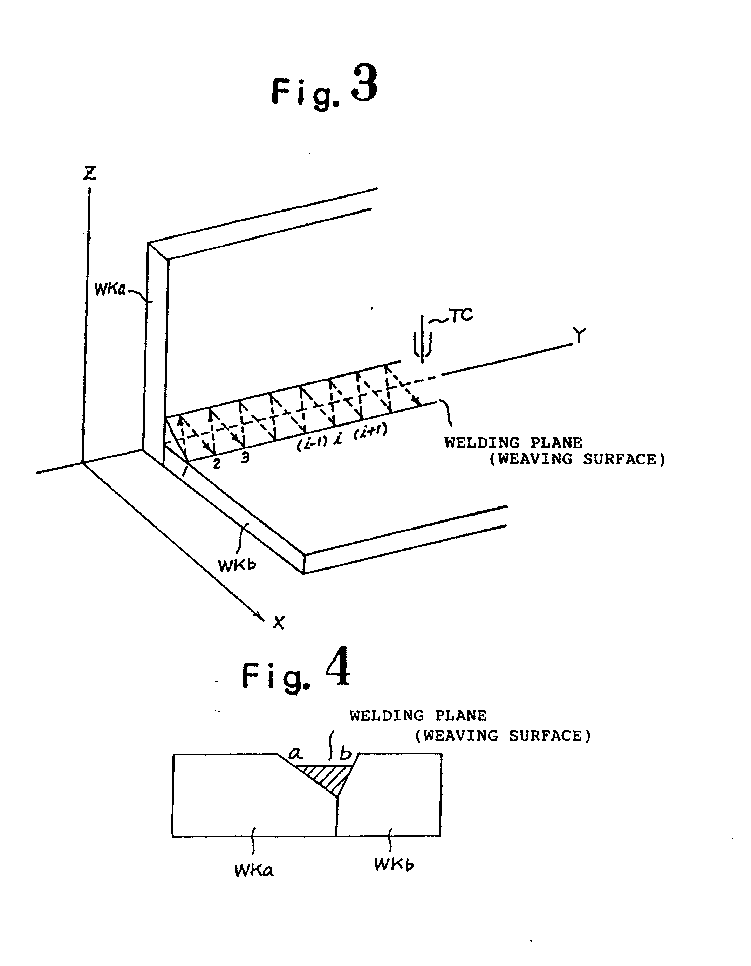

Fig. 3 illustrates an example of a weaving welding path of an automatic welding machine using an arc sensor in which welding current is sensed by the sensor I. Specifically, when welding two perpendicularly intersecting workpieces WKa, WKb, the workpieces WKa, WKb are set at predetermined positions and welding is performed while the torch TC is weaved along the welding plane in accordance with the illustrated weaving cycles 1, 2 ... (i-1), i, (i+1)... and so on.

In conventional weaving set forth above, positional deviation of the weld line is corrected and the fused portion is made planar by exercising correction control of the amount of torch movement, which is decided by the taught weaving amplitude, in such a manner that the value of welding current when the torch moves to the left side is the same as that when the torch moves to the right side in each and every cycle. However, this correction method is effective only when the fused surface of the workpieces has left-right symmetry at all times. The weaving surface comprising the welding plane for welding the workpieces WKa, WKb in Fig. 3 is not inclined at 45$^{\circ}$ with respect to the X-Y and Y-Z planes. When welding is performed along this weaving surface, a problem is encountered in that the amount of correction to be applied cannot be determined because the weaving surface is different from the plane (X-Y plane) in which the torch TC is moved, and because the cross-sectional shape of the welded portion is asymmetrical.

Disclosure of the Invention

An object of the present invention is to provide an automatic welding machine weld line correction system capable of correcting a weld line easily and accurately even if the welded portion has a cross-sectional configuration which is asymmetrical.

According to the present invention, there is provided a system for correcting a weld line in an automatic welding machine in which a voltage is applied across a welding workpiece and a wire projecting from the end of a torch so that an arc is generated from the tip of the wire, and the welding workpiece is welded by weaving the tip of the wire along a welding plane (weaving surface) while the wire is being successively paid out. The system comprises sensing means for sensing a welding current that flows between the wire tip and the welding workpiece, memory means for storing the welding current, which is sensed by the sensing means, at an extreme point to the left or right of a welding line at the time of weaving motion, and arithmetic means for computing an amount of weaving motion correction based on current values at two or more extreme points stored in the memory means.

The present invention senses welding current at a left or right extreme point of a welding line in a welding plane, stores welding current values at two or more extreme points on the left or right side of the weld line at the time of weaving motion, and decides the amount of torch correction based on these welding current values. Accordingly, the amount of correction can be decided both easily and accurately even when welding a workpiece which does not have left-right symmetry.

Brief Description of the Drawings

Fig. 1 is a block diagram illustrating an embodiment of a system for correcting a weld line in an automatic welding machine in accordance with the present invention;

Fig. 2 is a schematic view illustrating the arrangement of an automatic welding machine; and

Figs. 3 through 5 are views for describing a method of correcting a weld line.

Best Mode for Carrying Out the Invention

The present invention will now be described in detail based on an embodiment illustrated in the drawings.

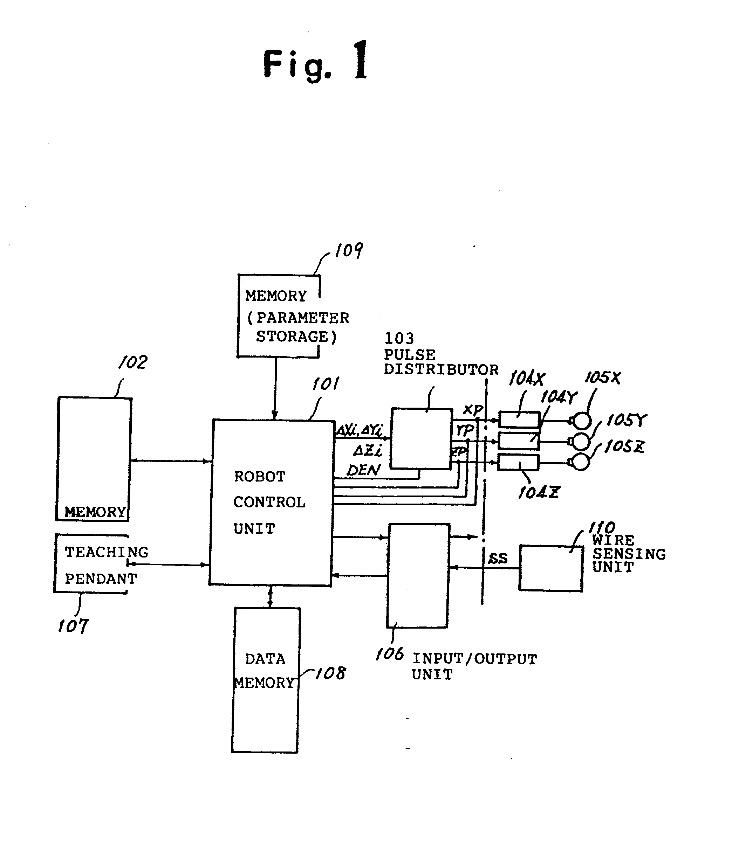

Fig. 1 is a block diagram illustrating an embodiment of a system for correcting a weld line in an automatic welding machine in accordance with the present invention. In the Figure, numeral 101 denotes a robot control unit, 102 a memory for storing robot command data, 108 a data memory for storing various data such as taught data and welding current data, described below, 109 a memory for storing various control parameters, 106 an input/output unit, and 107 a teaching pendant. Numeral 103 denotes a pulse distributor for outputting distributed pulses to servo units, described below, on the basis of a control signal from the robot control unit 101. Numerals 104X, 104Y, 104Z denote X-, Y- and Z-servo units of a robot, and numerals 105X, 105Y, 105Z represent servomotors corresponding to the servo units. Numeral 110 designates a wire sensing unit, to which the welding current from the sensor I (Fig. 2) is applied, for outputting this current to the input/output unit 106, and for generating a short-circuit signal when the wire at the end of the torch contacts the welding workpiece WK in a search mode.

The operation of the present embodiment, arranged as set forth above, will now be described.

When teaching performed by using the teaching pendant 107 ends and a changeover is made to a welding mode, the robot control unit 101 executes robot control processing by reading robot command data, which have been stored in the memory 102, out of the memory one block at a time in accordance with a control program.

If the amount of robot movement is $X_i$, $Y_i$, $Z_i$ (incremental values) and the feedrate is F, then the robot control unit 101 performs the operations

$$\Delta Xi = Fx \cdot \Delta T \qquad \ldots (1)$$

$$\Delta Yi = Fy \cdot \Delta T \qquad \ldots (2)$$

$$\Delta Zi = Fz \cdot \Delta T \qquad \ldots (3)$$

to obtain amounts of movement $\Delta Xi$, $\Delta Yi$, $\Delta Zi$ to be traversed along the X, Y and Z axes in a predetermined period of time T. These values are fed into the pulse distributor 103. It should be noted that $\Delta T$ is a period of time preset as a parameter in the memory 109. When $\Delta Xi$, $\Delta Yi$, $\Delta Zi$ enter the pulse distributor 103, the latter performs pulse distribution calculations for three axes simultaneously and applies distributed pulses Xp, Yp, Zp to the servo units 104X, 104Y, 104Z for the X, Y and Z axes, respectively, thereby driving the servomotors 105X, 105Y, 105Z to move the robot, which is not shown.

The pulse distributor 103 performs a monitoring operation to determine whether a number Nx of distributed pulses Xp along the X axis, a number Ny of distributed pulses Yp along the Y axis, and a number Nz of distributed pulses Zp along the Z axis have become equal to $\Delta Xi$, $\Delta Yi$ and $\Delta Zi$, respectively. When the condition

$$Nx = \Delta Xi, \quad Ny = \Delta Yi, \quad Nz = \Delta Zi, \qquad \ldots (4)$$

is established, the pulse distributor sends a pulse distribution end signal DEN to the robot control unit 101. In response, the robot control unit 101 updates present positions Xa, Ya, Za along the X, Y and Z axes in accordance with the following expressions:

-8-

$$Xa \pm {}_{\triangle}Xi \longrightarrow Xa, \quad Ya \pm {}_{\triangle}Yi \longrightarrow Ya,$$
$$Za \pm {}_{\triangle}Zi \longrightarrow Za \quad\quad\quad \cdots (5)$$

Similar processing is then repeated.

In accordance with the present invention, the welding current from the wire sensing unit 110 is applied to the robot control unit 101 via the input/output unit 106, and the control unit 101 stores the welding current that prevails at the extreme left and right points of the welding plane in the data memory 108. The robot control unit 101 determines the welding current at the left extreme point and/or right extreme point in each cycle of the weaving operation to correct the welding line.

More specifically, when welding the workpieces WKa and WKb described with reference to Fig. 3, the control unit corrects the direction of torch advance upon determining the amount of correction for the (i+1)th cycle from the difference between the welding current for the (i-1)th cycle and that for the i-th cycle at a left or right extreme point in the welding plane.

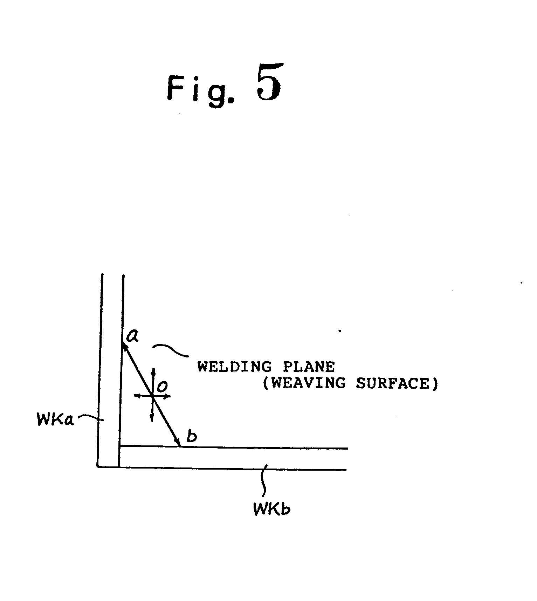

Though the present embodiment corrects the direction of torch advance upon sensing one of the welding currents in the welding plane, two corrections can be made upon sensing welding current separately at the left and right extremes of the welding plane. In other words, at left and right extreme points of the welding plane in Fig. 3, the amount of weld line correction in the horizontal direction can be

determined at one of the extreme points and the amount of weld line correction in the vertical direction can be determined at the other of the extreme points. For example, as shown in Fig. 5, the amount of horizontal correction for the (i+1)th cycle is determined from the difference between the welding current for the (i-1)th cycle and that for the i-th cycle at the left extreme point, and the amount of vertical correction for the (i+1)th cycle is determined from the difference between the welding current for the (i-1)th cycle and that for the i-th cycle at a right extreme point b.

Further, in a case where the welding surface agrees with the plane of movement of the workpieces, as shown in Fig. 4, it will suffice to determine the amount of correction of the welding line for the (i+1)th cycle based on the difference between the welding current at the right extreme point b (or left extreme point a) for the (i-1)th cycle of weaving and the welding current at the right extreme point b (or left extreme point a) for the i-th cycle of weaving.

Though the present invention has been described based on the illustrated embodiment, the invention is not limited solely to the embodiment but can be modified in various within the scope of the claims.

Industrial Applicability

As described above, the system for correcting the weld line of an automatic welding machine in accordance with the present invention senses welding current at an extreme point located to the left or right of the weld line on a welding surface, stores two or more welding currents at either of the extreme points to the left or right of the weld line at the time of weaving motion, and determines the amount of torch correction based on these welding current values. Accordingly, an amount of correction can be accurately determined even when the welding workpiece does not have left-right symmetry. Thus, the invention is well-suited for application to an automatic welding machine using a robot.

CLAIMS:

(1)  A system for correcting a weld line in an automatic welding machine in which a voltage is applied across a welding workpiece and a wire projecting from the end of a torch so that an arc is generated from the tip of the wire, and the welding workpiece is welded by weaving the tip of the wire along a welding plane (weaving surface) while the wire is being successively paid out, said system comprising:

(a) sensing means for sensing a welding current that flows between said wire tip and the welding workpiece;

(b) memory means for storing the welding current, which is sensed by the sensing means, at an extreme point to the left or right of a welding line at the time of weaving motion; and

(c) arithmetic means for computing an amount of weaving motion correction based on current values at two or more extreme points stored in said memory means.

(2)  A system for correcting a weld line in an automatic welding machine according to claim (1), characterized in that said arithmetic means calculates an amount of motion correction in the horizontal direction based on the welding current value at one extreme point at the time of weaving motion, and calculates an amount of motion correction in the vertical direction based on the welding current value at the other extreme point at the time of weaving motion.

# Fig. 1

MEMORY (PARAMETER STORAGE) — 109

102 — MEMORY

TEACHING PENDANT — 107

101 — ROBOT CONTROL UNIT

DATA MEMORY — 108

103 PULSE DISTRIBUTOR

$\Delta X_i, \Delta Y_i$
$\Delta Z_i$
DEN

XP
YP
ZP

104X  104Y  105X  105Y  105Z
104Z

106 INPUT/OUTPUT UNIT

SS

110 WIRE SENSING UNIT

# Fig. 2

# Fig. 3

Z

WKa

~TC

Y

(i-1) i (i+1)

2 3

WELDING PLANE
(WEAVING SURFACE)

WKb

X

# Fig. 4

WELDING PLANE
(WEAVING SURFACE)

a  b

WKa       WKb

# Fig. 5

WKa

a

o

WELDING PLANE
(WEAVING SURFACE)

b

WKb

## I. CLASSIFICATION OF SUBJECT MATTER (if several classification symbols apply, indicate all) ³

According to International Patent Classification (IPC) or to both National Classification and IPC

Int.Cl⁴     B23K9/12

## II. FIELDS SEARCHED

### Minimum Documentation Searched ⁴

| Classification System | Classification Symbols |
|---|---|
| IPC | B23K9/12 |

### Documentation Searched other than Minimum Documentation to the Extent that such Documents are Included in the Fields Searched ⁶

| | |
|---|---|
| Jitsuyo Shinan Koho | 1971 – 1985 |
| Kokai Jitsuyo Shinan Koho | 1971 – 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP, A, 54-106047 (Komatsu Ltd.) 20 August 1979 (20. 08. 79) (Family: none) | 1 |
| X | JP, B2, 57-25307 (Komatsu Ltd.) 28 May 1982 (28. 05. 82) (Family: none) | 2 |
| A | JP, A, 58-77775 (Yasukawa Electric Mfg. Co., Ltd.) 11 May 1983 (11. 05. 83) & EP, A, 76498 | 1 |

* Special categories of cited documents: ¹⁵
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search ² | Date of Mailing of this International Search Report ³ |
|---|---|
| March 20, 1986 (20. 03. 86) | April 7, 1986 (07. 04. 86) |

| International Searching Authority ¹ | Signature of Authorized Officer ²⁰ |
|---|---|
| Japanese Patent Office | |

Form PCT/ISA/210 (second sheet) (October 1981)